# EUROPEAN PATENT APPLICATION

(11) **EP 4 557 201 A1**
(43) Date of publication of application: **21.05.2025**
(21) Application number: 24213064.9
(22) Date of filing: 14.11.2024
(51) Int. Cl.: G06Q 20/40, G06Q 40/12, G06N 20/00

(54) **SYSTEM AND METHOD FOR TRAINING AND USING A MACHINE-LEARNING MODEL TO CATEGORIZE TRANSACTIONS**

(30) Priority: 17.11.2023 US 202363600361 P
(71) Applicant: Fiserv, Inc., Milwaukee, WI 53203 (US)
(72) Inventor: ZHANG, Zhiqiang, San Ramon (US); WANG, Rong, Campbell (US); LAN, Zezhi, Santa Clara (US)
(74) Representative: Haseltine Lake Kempner LLP

(57) **Abstract**

A system and method of training a neural network for categorizing transactions may include one or more processors and a computer-readable, non-transitory medium including instructions which, when executed by the one or more processors, cause at least one of the one or more processors to obtain transaction data of a transaction, the transaction data including an amount and a description, apply a machine-learning model on the transaction data to extract a confidence vector, wherein the machine-learning model is trained to categorize transactions, determine whether a confidence score of a transaction category satisfies a predetermined threshold, in response to determining that the confidence score of the transaction category does not satisfy the predetermined threshold, augment the description of the transaction using additional data, and in response to determining that the confidence score of the transaction category satisfies the predetermined threshold, assign the transaction category to the transaction.

## Description

### CROSS-REFERENCE TO RELATED APPLICATIONS

This application claims priority to U.S. Provisional Application No. 63/600361 filed November 17, 2023, which application is incorporated herein by reference in its entirety.

### BACKGROUND

Classification of transactions is important for tracking spending, identifying fraud, managing rewards programs, reporting taxes, and determining interchange fees. However, currently used transaction descriptions are insufficient to correctly classify a transaction. Due to network bandwidth restrictions, transaction descriptions are truncated, reducing an accuracy of transaction classification.

### SUMMARY

Various aspects of the disclosure may now be described with regard to certain examples and embodiments, which are intended to illustrate but not limit the disclosure. Although the examples and embodiments described herein may focus on, for the purpose of illustration, specific systems and processes, one of skill in the art may appreciate the examples are illustrative only, and are not intended to be limiting.

Aspects of the present disclosure relate to a system comprising one or more processors, and a computer-readable, non-transitory medium comprising instructions which, when executed by the one or more processors, cause at least one of the one or more processors to obtain transaction data of a transaction, the transaction data comprising an amount and a description, apply a machine-learning model on the transaction data to extract a confidence vector, wherein the machine-learning model is trained to categorize transactions, determine whether a confidence score of a transaction category satisfies a predetermined threshold, in response to determining that the confidence score of the transaction category does not satisfy the predetermined threshold, augment the description of the transaction using additional data, and in response to determining that the confidence score of the transaction category satisfies the predetermined threshold, assign the transaction category to the transaction.

In the example system, the machine-learning model may be trained to categorize transactions using a training set comprising a set of categorized transactions. In the example system the categorized transactions comprise standardized transaction categories and augmented descriptions. In the example system, the at least one of the one or more processors may augment the description of the transaction by adding additional words to the description based on the description and additional information. In the example system, the additional information includes at least one of an amount of the transaction, information from a website associated with a merchant associated with the transaction, historical user input, and location-specific information. In the example system, the confidence vector comprises a confidence scores associated with a plurality of transaction categories comprising the transaction category.

Aspects of the present disclosure relate to an example method including obtaining a set of transactions from a database, applying one or more transformations to each transaction including standardizing transaction codes of each transaction and augmenting a description of each transaction to create a modified set of transactions, creating a first training set comprising the modified set of transactions, training a machine-learning model in a first stage using the first training set, creating a second training set for a second stage of training, the second training set including transactions that were incorrectly categorized after the first stage of training, and training the machine-learning model in a second stage using the second training set.

In the example method, the transaction codes may include a plurality of codes from a plurality of databases. In the example method, standardizing the transaction codes of each transaction may include mapping a combination of multiple transaction codes to a single common category. In the example method, standardizing the transaction codes of each transaction may include determining a sub-category for the common category. In the example method, augmenting the description of each transaction may include adding additional words to the description based on the description and additional information. In the example method, the additional information may include an amount of the transaction. In the example method, the additional information may include information from a website associated with a merchant associated with the transaction. In the example method, the additional information may include historical user input. In the example method, the additional information may include location-specific information. The example method may include identifying the incorrectly categorized transactions based on user input.

Aspects of the present disclosure relate to a computer-readable, non-transitory medium including instructions which, when executed by one or more processors, cause at least one of the one or more processors to obtain a set of transactions from a database, apply one or more transformations to each transaction including standardizing transaction codes of each transaction and augmenting a description of each transaction to create a modified set of transactions, create a first training set comprising the modified set of transactions, train a machine-learning model in a first stage using the first training set, create a second training set for a second stage of training, the second training set including transactions that were incorrectly categorized after the first stage of training, and train the machine-learning model in a second stage using the second training set.

Standardizing the transaction codes of each transaction may include mapping a combination of multiple transaction codes to a single common category. Standardizing the transaction codes of each transaction may include determining a sub-category for the common category. Augmenting the description of each transaction may include adding additional words to the description based on the description and additional information. The additional information may include an amount of the transaction. The additional information may include information from a website associated with a merchant associated with the transaction. The additional information may include historical user input. The additional information may include location-specific information. The instructions may further cause the at least one of the one or more processors to identify the incorrectly categorized transactions based on user input.

The foregoing summary is illustrative only and is not intended to be in any way limiting. In addition to the illustrative aspects, embodiments, and features described above, further aspects, embodiments, and features may become apparent by reference to the following drawings and the detailed description.

### BRIEF DESCRIPTION OF THE DRAWINGS

FIG. 1 is an example block diagram of a computing system for training a machine-learning model to classify transactions.
FIG. 2 is an example block diagram of the standardization engine of FIG. 1.
FIG. 3 is an example block diagram of the augmentation engine of FIG. 1.
FIG. 4 is an example block diagram illustrating deployment of the machine-learning model of FIG. 1.
FIG. 5 is an example block diagram of the machine-learning model of FIG. 1.
FIG. 6 is an example flow chart of a method for training a machine-learning model to classify transactions.
FIG. 7 is an example flow chart of a method for using a machine-learning model to classify transactions.
FIG. 8 is an example block diagram of a computing system 100.

The foregoing and other features of the present disclosure may become apparent from the following description and appended claims, taken in conjunction with the accompanying drawings. Understanding that these drawings depict only several embodiments in accordance with the disclosure and are therefore, not to be considered limiting of its scope, the disclosure may be described with additional specificity and detail through use of the accompanying drawings.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It may be readily understood that the aspects of the present disclosure, as generally described herein, and illustrated in the figures, may be arranged, substituted, combined, and designed in a wide variety of different configurations, all of which are explicitly contemplated and made part of this disclosure.

Aspects of the present disclosure relate to automatically generating training data for training a machine-learning model to classify transactions. As used herein, the terms "classify" and "categorize" are used interchangeably. Some conventional systems rely upon complex sets of static rules or manual methods for classifying transactions which are rigid solutions with highly-limited applicability. Other conventional systems rely upon manual labeling of transactions to generate training data for a machine-learning model, requiring extensive manual intervention and severely limiting a scope and breadth of the machine-learning model. By automatically generating training data for a machine-learning model, a machine-learning model can be trained to have broad, flexible scope and to be widely applicable.

The training data may be automatically generated by standardizing transaction categories of categorized transactions and/or augmenting transaction descriptions. This represents a reversed categorization process which leverages categorized transactions from a variety of sources, such as payment transactions, web content, and point-of-interest (POI) databases. The transaction categories of the transactions may be standardized by applying a mapping on the transaction categories of various transaction categories to standardized transaction categories. The transaction descriptions may be augmented by leveraging additional data, such as location-specific data, the transaction category, web data, POI data, historical transaction data, and a predicted category to add, modify, or remove from the transaction descriptions. In some implementations, truncated transaction descriptions which have been truncated, resulting in information being lost, may be augmented to restore the lost information. In this way, the automatically generated training data may be standardized and/or augmented to provide a robust set of training data for training the machine-learning model without human intervention.

By training the machine-learning model using the automatically-generated training data, the machine-learning model may be trained in a fast, efficient, and scalable manner. The machine-learning model may be trained more quickly and more comprehensively than would be possible using conventional systems.

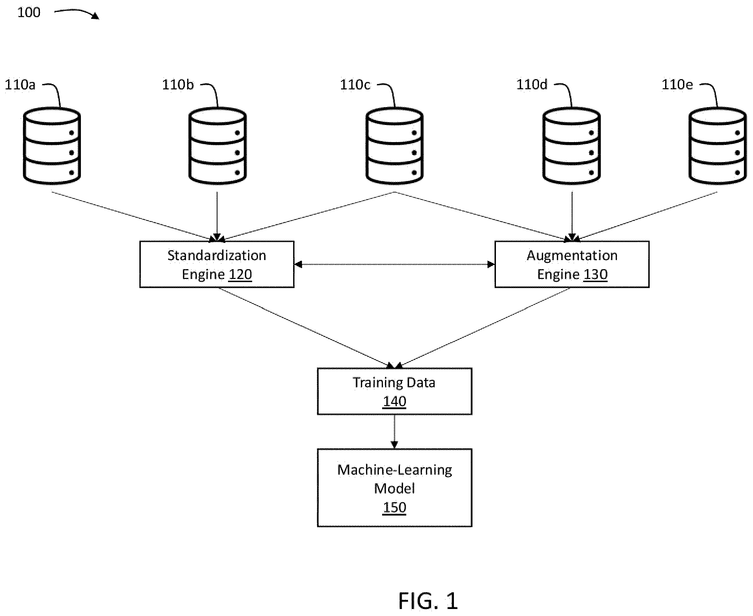

FIG. 1 is an example block diagram of a computing system 100 for training a machine-learning model 150 to classify transactions. The computing system 100 may include databases 110a, 110b, 110c, 110d, and 110e, referred to herein collectively as databases 110. Although five databases are illustrated, the databases 110 may include more or fewer than five databases. The databases 110 may include transactions (i.e., transaction information, data describing transactions). In some implementations, the databases 110 may each include data from a separate source and/or data of a different type. In some implementations, each database of the databases 110 includes data of a same data type from different sources. In an example, each of the databases 110 includes credit card transactions from different sources. In some implementations, each database of the databases 110 may include data from a same source of different data types. In an example, the databases 110 include different types of transactions executed at a merchant.

The transactions may be historical transactions. In an example, the databases 110 may include transactions obtained by a payment processor, such as an issuing processor. The term "transactions" may refer to financial transactions, including card payments, ACH transfers, checks, wire transfers, and other exchanges. In an example, a transaction is a credit card payment at a merchant for goods or services. While various examples discussed herein relate to transactions, the present disclosure applies to categorization of data other than transactions. Thus, the databases 110 may include any kind of data for which a machine-learning model may be trained for categorization. As discussed herein, categorization may refer to determining and/or assigning a category to a transaction. In an example, categorization of a transaction may include assigning an MCC to the transaction to aid in analyzing, sorting, and displaying the transaction.

The transactions may be synthetic transactions. In an example, the synthetic transactions may be generated based on the historical transactions. In an example, the synthetic transactions may be generated based on information associated with one or more merchants. The transactions may each include one or more of a transaction category, a transaction location, a transaction amount, and a transaction description.

At least some of the transactions may be categorized. The transactions may be categorized using a variety of category code types. Each transaction may be categorized using one or more category codes of one or more category code types. In an example, a first transaction may be categorized using a first category code of a first type and a second transaction may be categorized using a second category code of a second type and a third category code of the first type. The one or more category code types may be associated with different categorization standards, such as the North American Industry Classification System (NAICS)^{™}, the Standard Industrial Classification (SIC)^{™}, the Merchant Category Code (MCC)^{™}, point-of-interest (POI) vendor categorization standards, and other third-party categorization standards. In an example, a first transaction is categorized using an NAICS code, a second transaction is categorized using an SIC code, and a third transaction is categorized using a third-party code. The transaction categories of the set of transactions may be correct or incorrect. In an example, a first transaction is correctly categorized such that a first transaction category associated with the first transaction correctly describes a characteristic of the first transaction and a second transaction is incorrectly categorized such that a second transaction category associated with the second transaction incorrectly describes a characteristic of the second transaction.

At least some of the transactions may include descriptions. The descriptions may describe one or more characteristics of the transactions. The descriptions may describe a merchant, location, phone number, transaction identifier, transaction type, and/or merchant type of the transaction. The descriptions may be truncated. The descriptions may be truncated due to memory constraints of POS devices, memory constraints of an acquirer system, memory constraints of an issuer system, memory constraints of an issuer processor, and/or network bandwidth restrictions. The descriptions may be truncated such that the descriptions contain less information about the transaction than is needed to identify a transaction category. The descriptions may be truncated such that the descriptions are misleading and would result in assigning an incorrect transaction category. In some implementations, the descriptions may be truncated due to industry specifications that define the maximum allowed length of a data field. In some implementations, the descriptions may be truncated to limit network bandwidth usage. In an example, a transaction description of "Greater Valley Taxi" may be truncated to "Greater Valley Tax," causing the transaction to be incorrectly categorized as a tax services transaction.

The computing system 100 may include a standardization engine 120. The standardization engine 120 may standardize the transaction categories of the transactions. The standardization engine 120 may standardize the transaction categories of the transactions such that the transaction categories follow a single transaction standard. In an example, the standardization engine 120 may standardize the transaction categories of the transactions such that the transactions are categorized using MCCs. The standardization engine 120 may standardize the transaction categories by mapping the transaction categories of the transactions to a standardized set of transaction categories. In an example, the standardization engine 120 may standardize the transaction categories by mapping the transaction categories of the transactions to MCCs.

The computing system 100 may include an augmentation engine 130. The augmentation engine 130 may augment the descriptions of the transactions based on the descriptions and additional data. The augmentation engine 130 may add, modify, or remove letters and/or words from the descriptions. In some implementations, the augmentation engine 130 may determine whether to augment a description based on a content of the description. In an example, the augmentation engine 130 may parse the description and/or receive a message corresponding to the parsed description in order to determine whether the description can be readily parsed by a computer. In this example, if the description is not readily parsed, the augmentation engine 130 may determine to augment the description. In some implementations, a separate parsing engine attempts to parse the description and determines whether the description should be parsed.

The augmentation engine 130 may add letters and/or words to truncated descriptions to more accurately describe the corresponding transactions. In an example, the augmentation engine 130 may take the truncated description of "Greater Valley Tax," and compare the truncated description to location data to determine that there is no business called "Greater Valley Tax" in the location specified by the location data. In this example, the augmentation engine 130 may, based on the location data, determine that "Greater Valley Tax" should be "Greater Valley Taxi," and augment "Greater Valley Tax" to be "Greater Valley Taxi."

The standardization engine 120 may deliver transactions with standardized transaction categories to the augmentation engine 130 for augmentation of the descriptions of the transactions. In an example, each transaction of the transactions has its codes standardized by the standardization engine 120 and then each transaction has its description augmented by the augmentation engine 130. In some implementations, the augmentation engine 130 may deliver transactions with augmented descriptions to the standardization engine 120. In some implementations, transactions may be passed back and forth between the standardization engine 120 and the augmentation engine 130. In an example, the standardization engine 120 standardizes a transaction category of a transaction, then the augmentation engine 130 augments its description, and then the standardization engine 120 modifies the transaction category of the transaction based on the augmentation engine 130. In some implementations, the computing system 100 includes another engine for comparing the standardized transaction category to the augmented description to ensure a match.

The standardization engine 120 and the augmentation engine 130 deliver the standardized and/or augmented transactions to create training data 140 for a machine-learning model 150. The training data 140 may include the transactions, each including one or more of a standardized transaction category, an augmented description, a transaction location, and a transaction amount. The training data 140 may be further modified for training the machine-learning model 150. The machine-learning model 150 may be applied on the training data 140 to train the machine-learning model 150. As discussed herein, the machine-learning model 150 may be trained in a first stage of training using the training data 140 and then trained in a second stage of training using transactions incorrectly categorized after the first stage of training. The training data 140 may include multiple training sets for training the machine-learning model in multiple different stages. In some implementations, the training data 140 may include two versions of a transaction: a raw version and a standardized and/or augmented version. In this way, the machine-learning model 150 may be trained to recognize and/or generate the correct description and/or classification from a non-standardized, non-augmented description. Thus, when the machine-learning model 150 receives truncated, noisy, or incomplete transaction information as input, the machine-learning 150 may apply its trained learnings to correctly categorize the transaction, as discussed herein.

The training data 140 may serve as labeled training data for supervised training. The standardized transaction categories may serve as labels to train the machine-learning model to correctly categorize transactions. By processing the transactions using the standardization engine 120 and the augmentation engine 130, the training data 140 may be generated without human intervention, greatly reducing the time needed to generate the training data and increasing the volume, scale, and scope of the training data. This represents a technical improvement over conventional systems which require manual labeling of transactions with transaction categories.

The machine-learning model 150 may be any type of machine-learning model, such as a neural network, support vector machine (SVM), decision tree, ensemble tree, generalized additive model (GAM), a naive Bayes classifier, a discriminant analysis classifier, or other type of machine-learning model. In an example, the machine-learning model is a neural network with an input layer, one or more hidden layers, and an output layer. The machine-learning model 150 may be trained to categorize transactions by applying the machine-learning model 150 on the training data 140 including categorized transactions. The machine-learning model 150 may be trained to categorize transactions using the standardized categorization standard used by the standardization engine 120, as the training data 140 includes transactions with transaction categories standardized by the standardization engine 120.

The trained machine-learning model 150 may be used to categorize uncategorized transactions, as discussed herein. In an example, the trained machine-learning model may be used to receive credit card transactions as input and output MCCs for the credit card transactions and/or assign an MCC to each credit card transaction. The machine-learning model 150 may be trained in multiple stages, as discussed herein. The machine-learning model 150 may continually updated based on feedback. In an example, the machine-learning model 150 may be continually updated based on user feedback. In an example, the machine-learning model 150 may be continually updated based on transactions incorrectly categorized by the machine-learning model 150.

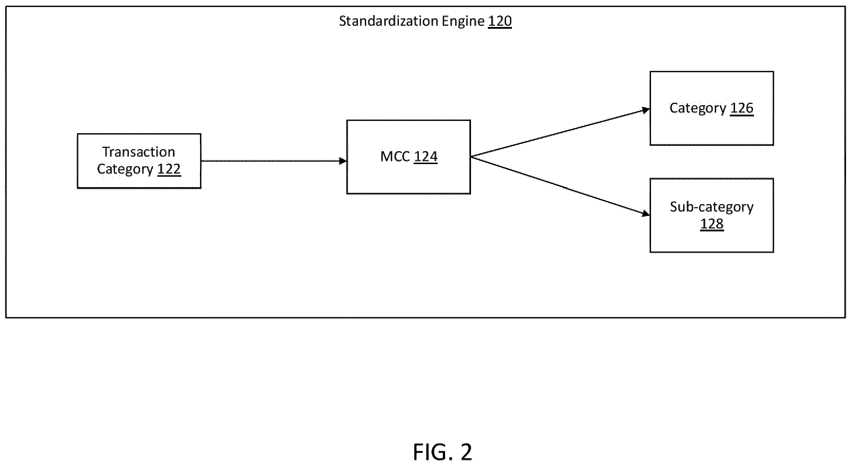

FIG. 2 is an example block diagram of the standardization engine 120 of FIG. 1. The standardization engine 120 may standardize a transaction category 122 of a transaction based on a single categorization standard, such as the MCC categorization standard. Although the MCC categorization standard is discussed herein as the basis for the single categorization standard, other categorization standards may be used, such as the NAICS^{™} or SIC^{™} standards. The transaction category 122 may be an NAICS^{™} code, an SIC^{™} code, a point-of-interest vendor categorization, or other type of categorization. Each transaction may include one or more transaction categories. In an example, a transaction may be categorized with an NAICS^{™} code and an SIC^{™} code.

The standardization engine 120 may determine an MCC 124 for the transaction based on the transaction category 122 by applying one or more rules to the transaction category. The standardization engine 120 may apply a mapping of transaction categories (e.g., NAICS^{™} or SIC^{™} codes) to MCCs to determine the MCC 124 for the transaction. In some implementations, the transaction category 122 is an MCC and the standardization engine 120 uses the transaction category 122 as the MCC 124 for the transaction. In some implementations, the transaction category 122 is an MCC and the standardization engine 120 applies one or more rules to standardize the transaction category 122 based on a merchant associated with the transaction.

In some implementations, the transaction category 122 includes a combination of codes from one or more categorization standards. The standardization engine 120 may determine the MCC 124 based on a mapping of combinations of codes to MCCs.

The standardization engine 120 may standardize multiple MCCs across multiple transactions all associated with a same merchant to a single MCC. In an example, the standardization engine 120 may standardize multiple MCCs associated with the retailer TARGET^{™} such as "5310" for "Discount Stores" and "8043" for "Opticians, Optical Goods, and Eyeglasses," to a single MCC such as "5411" for "Grocery Stores, Supermarkets." The standardization engine 120 may standardize multiple MCCs from the same merchant, or from merchants with similar names to a standard MCC. In this way, the standardization engine 120 may simplify the transaction categories and increase an accuracy of the transaction categories.

The standardization engine 120 may standardize multiple MCCs across multiple transactions all associated with a same merchant (or transactions associated with merchants with similar names) to a single MCC based on one or more rules. The standardization engine 120 may standardize multiple MCCs to a single MCC if certain conditions are met. In an example, the standardization engine 120 may standardize multiple MCCs associated with the merchant U-HAULTM such as "5999" for "Miscellaneous and Specialty Retail Stores" and "4225" for "Public Warehousing-Farm Products, Refrigerated Goods, Household Goods Storage" to a single MCC such as "7513" for "Truck Rental" if the transaction description does not include "Moving & Storage." In this example, the rule serves to separate out truck rental transactions from moving and storage transactions to more accurately standardize the MCCs. In an example, the standardization engine 120 may standardize multiple MCCs associated with the merchant SAM'S CLUB^{™} such as "5411" for "Grocery Stores, Supermarkets," "5542" for "Fuel Dispenser, Automated," "5912" for "Drug Stores and Pharmacies," and "5541" for "Service Stations (With or Without Ancillary Services)" to a single MCC such as "5300" for "Wholesale Clubs" if the transaction description does not include "GAS." In this example, the rule serves to separate out wholesale club transactions from fuel transactions to more accurately standardize the MCCs.

The standardization engine 120 may determine a category 126 and sub-category 128 for the MCC 124. The sub-category 128 may be a sub-category of the category 126. The standardization engine 120 may determine the category 126 and sub-category 128 for the MCC 124 based on a mapping of MCCs to categories and sub-categories. The category 126 and the sub-category 128 may further categorize the MCC 124 to provide more granular categorization. The category 126 and the sub-category 128 may help train the machine-learning model 150 to predict a category 126 and sub-category for a transaction in order to more accurately predict an MCC for the transaction. In some implementations, the category 126 and the sub-category 128 may correspond to MCCs and/or a range of MCCs. In some implementations, the category 126 and the sub-category 128 may correspond to NAICS, SIC, or POI vendor codes and/or ranges of NAICS, SIC, or POI vendor codes. In some implementations, the category 126 and the sub-category 128 may be part of a separate categorization protocol, such as a proprietary categorization protocol. In an example, the category 126 is "restaurants" and the sub-category 128 is "fast food delivery."

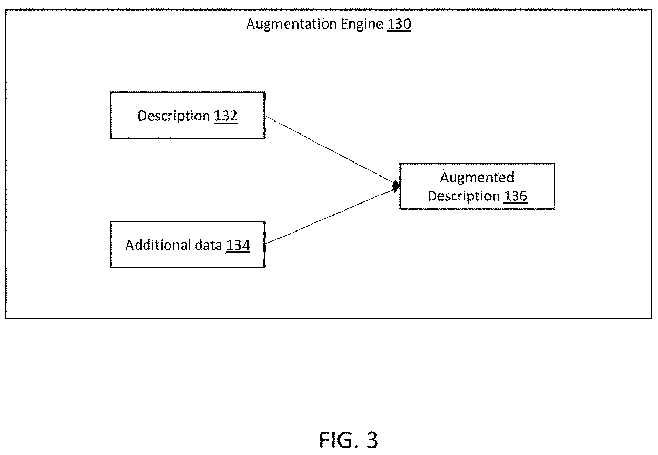

FIG. 3 is an example block diagram of the augmentation engine 130 of FIG. 1. The augmentation engine 130 may take as input a description 132 of a transaction and additional data 134 and output an augmented description 136. The description 132 may be a truncated description, a noisy description, and/or a description lacking information necessary for categorization of the transaction. The additional data 134 may be data associated with the transaction, data inferred from one or more characteristics of the transaction, data inferred from the transaction category of the transaction, and/or external data. The augmentation engine 130 may use the additional data 134 to augment the description 132 with location data, a prefix, a suffix, a phone number, and/or a category stop word to generate the augmented description 136.

The augmentation engine 130 may parse the description to determine whether and how to augment the description. As discussed herein, the machine-learning model 150 extracts embeddings from transaction descriptions. In some implementations, the machine-learning model 150 may extract an embedding to determine whether and how to augment the description. The augmentation engine 130 may determine what types of additional information, such as location data, phone numbers, transaction types, and other additional data to determine what can be used to augment the description. In some implementations, the augmentation engine 130 augments the description using all available additional information. In some implementations, the augmentation engine 130 augments the description using additional data which addresses one or more deficiencies in the description, as identified by the augmentation engine 130 and/or the machine-learning model 150, as discussed herein. In an example, the augmentation engine 130 may augment the description using location data based on the description being incomplete or misleading due to a lack of location information.

In an example, the augmentation engine 130 may augment a first description of "BERNADETTES" with first location data to generate a first augmented description of "BERNADETTES ROCKAWAY BEACH NY" and augment a second description of "BERNADETTES" with second location data to generate a second augmented description of "BERNADETTES ATLANTA GA," where the merchant "BERNADETTES" in New York is a restaurant and the merchant "BERNADETTES" in Georgia is a hair salon. In this example, training the machine-learning model using the first and second augmented descriptions may allow for the machine-learning model 150 to accurately categorize the two different merchants named "BERNADETTES" based on their location.

In an example, the augmentation engine 130 may augment a description of "CHILD CRISIS CENTER" based on a transaction category of "charities" with a phone number associated with charitable donations to generate an augmented description of "CHILD CRISIS CENTER 4808349424." In this example, training the machine-learning model using the augmented description may allow for the machine-learning model 150 to accurately categorize transactions associated with the phone number and/or the description "CHILD CRISIS CENTER" as charitable donations.

In an example, the augmentation engine 130 may augment a description of "KIRK FIELDER" based on a type of transaction being a bill payment with a suffix to generate an augmented description of "KIRK FIELDER - BILL PAYMT." In this example, training the machine-learning model using the augmented description may allow for the machine-learning model 150 to accurately categorize transactions associated with the description "KIRK FIELDER" as bill payments. In some implementations, the augmentation model 130 may account for a frequency of categorization to generate the augmented description 136. In an example, the augmentation model 130 may augment payments to an individual as bill payments if they occur at regular intervals. In this way, reoccurring payments to an individual such as rent payments are accurately augmented as bill payments while one-time payments to an individual are not necessarily augmented as bill payments.

In an example, the augmentation engine 130 may augment a description of "P3JLRJ34JLD5" based on the category 126 and/or sub-category 128 of the transaction with a category identifier of "COLLISION" to generate an augmented description of "COLLISION P3JLRJ34JLD5." In this example, training the machine-learning model using the augmented description may allow for the machine-learning model 150 to accurately categorize similar transactions as vehicle repair and maintenance. Without the augmented description, the machine-learning model may not be as effectively trained, as the description of "P3JLRJ34JLD5" does not appear to offer much information.

In some implementations, the augmentation 130 may augment the description 132 using the additional data 134 to generate the augmented description 136 to train the machine-learning model 150 to correctly categorize transactions that would be incorrectly categorized based on just the description 132. In an example, a transaction at the merchant "Butterfly Kiss Photography" may have a truncated description of "Butterfly Kiss Pho," which may cause the transaction to be categorized as a restaurant transaction. However, in this example, the augmentation engine may augment the description with location data, correlating the truncated description with local merchant names, to generate the augmented description of "Butterfly Kiss Photography" to train the machine-learning model 150 to accurately categorize similar transactions. In an example, a transaction at the merchant "Orlando's Personal Fitness" may have a truncated description of "Orlando's Personal Fi," which may cause the transaction to be categorized as an accounting or tax preparation transaction. However, in this example, the augmentation engine may augment the description with location data, correlating the truncated description with local merchant names, to generate the augmented description of "Orlando's Personal Fitness" to train the machine-learning model 150 to accurately categorize similar transactions.

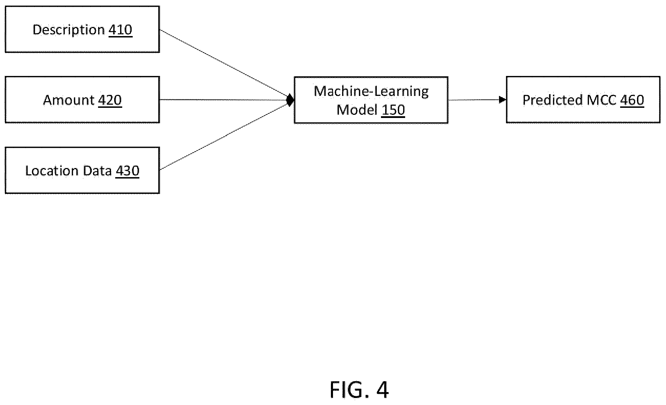

FIG. 4 is an example block diagram illustrating deployment of the machine-learning model 150 of FIG. 1. The machine-learning model 150 may take as input transaction data for each transaction, including one or more of a description 410, an amount 420, and location data 430. In some implementations, the transaction data may include the description 410 and the amount 420, but not the location data. In some implementations, the transaction data may include the description 410, the amount 420, and the location data 430. In some implementations, the transaction data may not include a transaction category. In some implementations, the transaction data may include a correct transaction category or an incorrect transaction category. The machine-learning model 150 may also receive additional inputs.

The machine-learning model 150 may output a predicted MCC 460. The machine-learning model 150 may be trained using the training data 140 to predict the predicted MCC 460 based on the transaction data. Categorization of transactions is important for tracking spending, identifying fraud, managing rewards programs, reporting taxes, and determining interchange fees. Thus, it is important to have accurately categorized transactions. The present disclosure provides for highly accurate, scalable, training and implementation of machine-learning models for categorizing transactions. Although examples are discussed of categorizing transactions according to or using MCCs, the machine-learning model may be trained to predict SIC and/or NAICS codes.

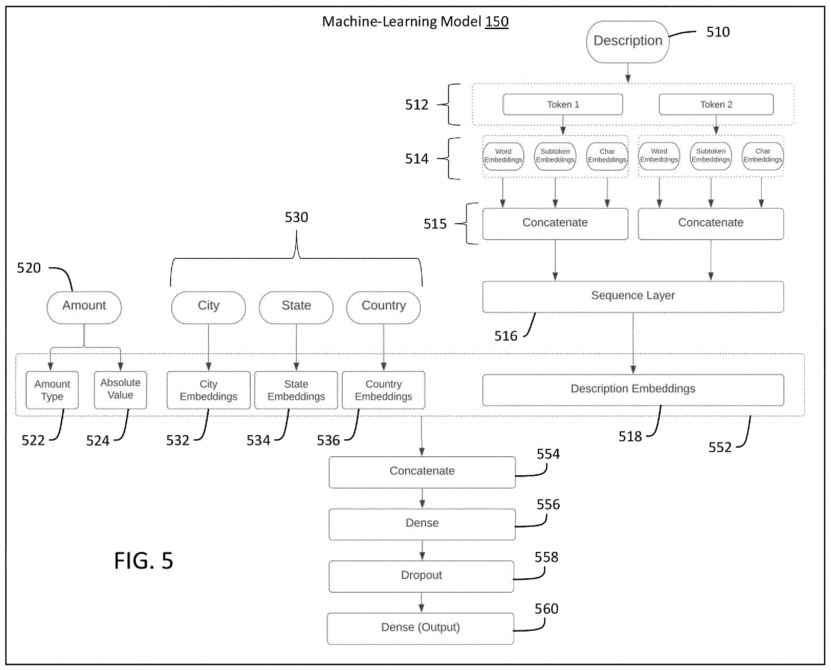

FIG. 5 is an example block diagram of the machine-learning model 150 of FIG. 1. As described in conjunction with FIG. 4, the machine-learning model 150 receives as input a transaction description 510, a transaction amount 520, and location data 530 and outputs an output, such as a predicted MCC.

The machine-learning model 150 may tokenize the description 510 to obtain tokens 512. The tokens 512 may be segments of the description 510 corresponding to portions of the description 510 having distinct meanings. In some implementations, the tokens 512 may be the smallest segments possible of the description 510 having distinct meanings. Although two tokens 512 are illustrated, the tokens 512 may include any number of tokens, based on the description and the method used to tokenize the description. In an example, a description of "car payment" may be tokenized as "car" and "payment." The machine-learning model 150 may extract, from each of the tokens 512, token embeddings 514 including word embeddings, subtoken embeddings, and character embeddings. The word embeddings may capture natural language features and understandings of the description 510. The sub-word embeddings and character embeddings may serve to capture noisy description patterns, unknown description patterns, unknown words, and words with noise. In an example, the sub-word embeddings may be used to distinguish between different parts of a concatenated description such as "FERRARAPIZZA." In this example, the sub-word embeddings may include "FERRARA" and "PIZZA" to in order to identify two known words from the unknown word of "FERRARAPIZZA." In another example, the sub-word embeddings and/or the character embeddings may be used to extract information from noisy embeddings containing numbers, letters, truncated words, and/or concatenated description. The machine-learning model 150 may extract the token embeddings 514 for each token of the tokens 512. Although two tokens are shown, the tokens 512 may include any number of tokens.

The machine-learning model 150 may concatenate the token embeddings 514 corresponding to each token of the tokens 512 to generate a composite embedding 515 for each token. The machine-learning model 150 may include a concatenate layer to concatenate the token embeddings 514. The machine-learning model 150 may arrange the composite embedding for each token in a sequence layer 516 of the machine-learning model. The machine-learning model 150 may extract, from the sequence layer 516, description embeddings 518. The description embeddings 518 may be low-dimension vector representations of the description. The description embeddings 518 may be lower-dimension representations of features of the description 510. The description embeddings 518 may be lower-dimension than the description 510.

The machine-learning model 150 may extract, from the transaction amount 520, an amount type 522 and an absolute value 524. The amount type 522 may describe whether the transaction is a deposit, debit, or credit transaction, describing whether the transaction has a positive or negative effect on a balance or an available credit. The absolute value 524 may describe the size, or amount of the transaction. In an example, the absolute value 524 may be "$3,350." In this example, the amount type 522 may describe whether the "$3,350" is a payment, such as a mortgage payment, or a purchase, such as an airline ticket.

The machine-learning model 530 may extract, from the location data 530, location embeddings including city embeddings 532, state embeddings 534, and country embeddings 536 describing a city, state, and country, respectively, where the transaction took place. In some implementations, the location data 530 corresponds to a location of a merchant associated with the transaction. In some implementations, the location data 530 corresponds to a location of a card or cardholder executing the transaction. In some implementations, the location data 530 describes both the location of the merchant and the location of the card or cardholder.

The machine-learning model 150 may include an embedding layer 552 including the amount type 522, the absolute value 524, the city embeddings 532, the state embeddings 534, the country embeddings 536, and the description embeddings 518. The machine-learning model 150 may include a concatenate layer 554 to concatenate the embeddings in the embedding layer 552. The machine-learning model 150 may include a dense layer 556 to condense the information in the concatenated embeddings, or to extract principal components of the concatenated embeddings. The machine-learning model 150 may include a dropout layer 558 to randomly drop out elements from the output of the dense layer 556. The dropping out elements from the output of the dense layer 556 may mean excluding elements from the output of the dense layer 556 during training of the machine-learning model. The machine-learning model 150 may include additional dropout layers for dropping additional elements during training. By using the dropout layer 558, the machine-learning model avoids overfitting, allowing for improved training and performance of the machine-learning model 150 by preventing the machine-learning model from being trained on statistical noise of the training data 140. In some implementations, the dropout layer 558 is disabled during implementation of the machine-learning model.

The machine-learning model 150 may include a dense output layer 560 to output a vector with a confidence score for each MCC. The vector may include a list of MCCs, each associated with a confidence score representing a confidence of the machine-learning model that the associated MCC is the correct MCC for categorizing the transaction. The predicted MCC 460 may be the MCC associated with the highest confidence score in the vector. In some implementations, when the MCC with the highest confidence score in the vector has a confidence score above a threshold, such as .8, the MCC with the highest confidence score may be output as the predicted MCC 460. In some implementations, when the MCC with the highest confidence score in the vector has a confidence score below a threshold, such as .8, a probability curve may be used. If the MCC with the highest confidence score is above an elbow of the probability curve and the second-highest MCC is at the elbow, the MCC with the highest confidence score may be output as the predicted MCC 460. In some implementations, the machine-learning model 150 may output the vector with a confidence score for each MCC and a predicted category and/or predicted sub-category for each MCC. In some implementations, when the two top MCCs are different but share the same sub-category, the machine-learning model outputs the top MCC and the shared sub-category.

In some implementations, the machine-learning model 150 may output at least one of the top MCC, the predicted category, the predicted sub-category, the location, and the augmented description.

As discussed herein, the machine-learning model 150 may correctly categorize transactions that would be incorrectly categorized but for the training of the machine-learning model 150. In an example, a transaction at the merchant "Butterfly Kiss Photography" may have a truncated description of "Butterfly Kiss Pho," which would cause the transaction to be categorized as a restaurant transaction. However, in this example, the machine-learning model 150 may be trained using an augmented description ("Butterfly Kiss Photography") such that the machine-learning model 150 can accurately categorize the transaction as a photography transaction, outputting the MCC "7221" for "Goods & Merchandise > Photography Art and Graphics."

In an example, a transaction at the merchant "Orlando's Personal Fitness" may have a truncated description of "Orlando's Personal Fi," which would cause the transaction to be categorized as an accounting or tax preparation transaction. However, in this example, the machine-learning model 150 may be trained using an augmented description ("Orlando's Personal Fitness") such that the machine-learning model 150 can accurately categorize the transaction as a fitness transaction, outputting the MCC "7997" for "Health & Lifestyle > Clubs Gyms Fitness."

In an example, a transaction at the merchant "Greater Valley Taxi" may have a truncated description of "Greater Valley Tax" which would cause the transaction to be categorized as an accounting or tax preparation transaction. However, in this example, the machine-learning model 150 may be trained using an augmented description ("Greater Valley Taxi") such that the machine-learning model 150 can accurately categorize the transaction as a transportation transaction, outputting the MCC "4121" for "Travel & Transportation > Ground Transportation."

In an example, a transaction at the merchant "The Home Gnome" may not have a transaction category, frustrating attempts at categorization. However, in this example, the machine-learning model 150 may be trained using a transaction category standardized from a variety of categorizations such as NAICS^{™} or SIC^{™} codes indicating that "The Home Gnome" corresponds to "Home Gnome Inspections" such that the machine-learning model 150 can accurately categorize the transaction as a home inspection transaction, outputting the MCC "1799" for "Home Expenses > Home Improvement Repair & Maintenance."

In an example, a transaction at the merchant "Magic Moments" may not have a transaction category, frustrating attempts at categorization. However, in this example, the machine-learning model 150 may be trained using a transaction category standardized from a variety of categorizations such as NAICS^{™} or SIC^{™} codes indicating that "Magic Moments" corresponds to "Magic Moments Wedding Specialists" such that the machine-learning model 150 can accurately categorize the transaction as a wedding transaction, outputting the MCC "7299" for "Health & Lifestyle > Personal Care."

In an example, a transaction at the merchant "Carry & Sun USA" may not have a transaction category, frustrating attempts at categorization. However, in this example, the machine-learning model 150 may be trained using a transaction category standardized from a variety of categorizations such as NAICS^{™} or SIC^{™} codes indicating that "Garry & Sun USA" corresponds to "Carry N Sun Ayurveda" such that the machine-learning model 150 can accurately categorize the transaction as a specialty store transaction, outputting the MCC "5999" for "Goods & Merchandise > Specialty Stores."

In an example, a transaction with the merchant description "KENDALL CENTER YELLOCAMBRIDGE MA" may not have a transaction category, frustrating attempts at categorization, particularly given the noisy nature of the merchant description. However, in this example, the machine-learning model 150 may be trained using an augmented description ("KENDALL CENTER YELLOW GARAGE") such that the machine-learning model 150 can extract embeddings from the noisy merchant description to accurately categorize the transaction as a parking transaction, outputting the MCC "7523" for "Travel & Transportation > Parking & Tolls."

In an example, a transaction with the merchant description "THEREMEDYROOM THEREMEDYROOMLA" may not have a transaction category, frustrating attempts at categorization, particularly given the noisy nature of the merchant description. However, in this example, the machine-learning model 150 may be trained using an augmented description ("THE REMEDY ROOM LA") such that the machine-learning model 150 can extract embeddings from the noisy merchant description to accurately categorize the transaction as a health transaction, outputting the MCC "7297" for "Health & Lifestyle > Personal Care."

In an example, a transaction with the merchant description "PAYPAL *FERRARAPIZZA8889749928 NY" may not have a transaction category, frustrating attempts at categorization, particularly given the noisy nature of the merchant description. However, in this example, the machine-learning model 150 may be trained using an augmented description ("FERRARA PIZZA") such that the machine-learning model 150 can extract embeddings from the noisy merchant description to accurately categorize the transaction as a restaurant transaction, outputting the MCC "5812" for "Food & Dining > Restaurants."

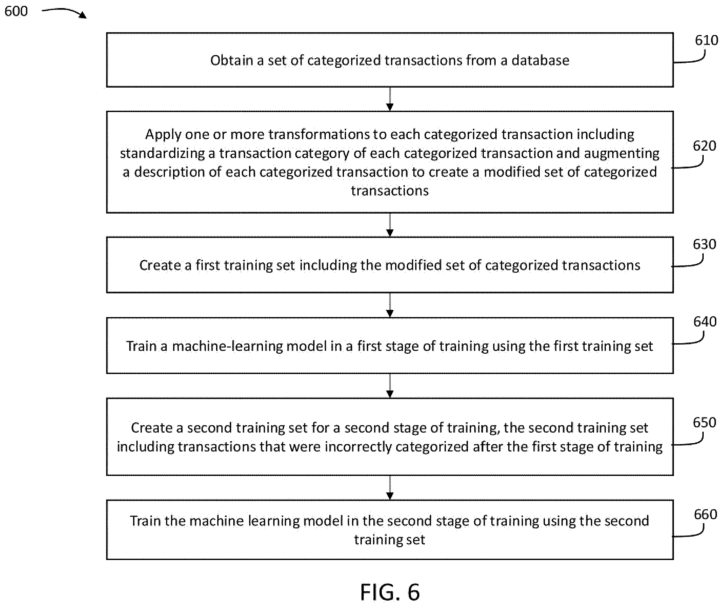

FIG. 6 is an example flow chart of a method 600 for training a machine-learning model to classify transactions. The method 600 may be performed by one or more processors of one or more components of the computing system 100. The method 600 may include more, fewer, or different operations than shown. The operations may be performed in the order shown, in a different order, or concurrently.

At 610, a set of categorized transactions are obtained from a database. The set of categorized transactions may be historical transactions or synthetic transactions. Each transaction may include transaction information including at least one of a transaction amount, a transaction type, a transaction location, a transaction description, and a transaction category. The transaction category may include one or more codes from one or more categorization standards. In an example, the transaction category may include an SIC^{™} code and an NAICS^{™} code.

At 620, one or more transformations are applied to each categorized transaction including standardizing a transaction category of each categorized transaction and augmenting a description of each categorized transaction to create a modified set of categorized transactions. In some implementations, standardizing the transaction category of each transaction includes applying, to the transaction category, a mapping of transaction categories to a standard categorization. In an example, the transaction categories may be mapped to MCCs. In some implementations, the transaction category includes a transaction code corresponding to a categorization standard different from a categorization standard used in standardizing the transaction category. In an example, the transaction category may include an SIC^{™} code, while the transaction categories are standardized to be MCCs.

In some implementations, standardizing the transaction category of each transaction includes determining a category and a sub-category for the standardized transaction category. The category and the sub-category for each standardized transaction category may correspond to codes of one or more categorization standards, ranges of codes of one or more categorization standards, or separate categorization criteria. In an example, the standardized transaction category may be an MCC, and separate categories and sub-categories specific to the training process may be applied to describe the MCC.

In some implementations, augmenting the description of each transaction includes adding additional words to the description based on the description and additional information. In an example, a truncated description may be augmented to add additional letters and/or words to obtain the full description from the truncated description. In some implementations, the additional information includes an amount of the transaction. In some implementations, the amount of the transaction may be used to determine a transaction type which is used to augment the description. In an example, a large recurring payment may be identified as a mortgage payment, causing the description to be augmented with "MORTGAGE." In some implementations, the additional information includes information from a website associated with a merchant associated with the transaction. In some implementations, the information from the website may be used to verify an accuracy of the transaction. In some implementations, the information from the website may be added to the description to augment the description. In an example, a merchant website may describe the merchant as providing apartments for rent, causing the description to be augmented with "RENT PYMT."

In some implementations, the additional information includes historical user input. The historical user input may be a correction of an augmentation or a user-provided augmentation. In an example, a user may augment a description based on their knowledge causing an augmentation engine to add a rule to augment similar descriptions in the same way in order to capture the user's knowledge in training the machine-learning model. In some implementations, the additional information includes location-specific information. In some implementations, the description may be augmented with the location-specific information. In some implementations, the description may be augmented based on correlating the description with the location-specific information. The description may be correlated with merchant names associated with the location-specific information in order to augment the description with the correct merchant name or a category identifier. In an example, the location-specific information describes that the transaction took place in Provo, Utah, causing the augmentation engine to correlate a merchant name of "Joe's Store" with merchants in Provo, Utah to correctly determine that the merchant sells auto parts. In this example, the augmentation engine may augment the description with "auto parts" to improve the training of the machine-learning model.

At 630, a first training set is created including the modified set of categorized transactions. The modified set of categorized transactions may include transactions with standardized transaction categories and augmented descriptions. In an example, the first training set includes transactions categorized using MCCs and having augmented descriptions to more accurately describe the transactions. In this way, the machine-learning model may be trained to accurately output MCCs based on transaction information. The first training set may serve as a labeled training set, where the standardized transaction categories serve as the labels. This provides significant technical advantages over conventional systems, as automatically generating the standardized transaction categories saves significant time over conventional systems which require manual labeling.

At 640, the machine-learning model is trained in a first stage of training using the first training set. The machine-learning model may be trained by applying the machine-learning model on the first training set. The machine-learning model may be trained in the first stage of training until an accuracy of the machine-learning model surpasses a predefined first stage threshold. The accuracy of the machine-learning model may be determined by comparing predicted MCCs generated by the machine-learning model to ground-truth MCCs. In an example, the machine-learning model may be applied on one or more transactions from the training set with their transaction categories removed to compare the predicted MCCs to the removed transaction categories. Transactions that are incorrectly categorized by the machine-learning model may be collected, marked, flagged, or otherwise noted.

At 650, a second training set is created for a second stage of training, the second training set including the transactions that were incorrectly categorized after the first stage of training. The second training set may include transactions that were used to test the accuracy of the machine-learning model and which were incorrectly categorized by the machine-learning model. The second training set may also include additional transactions. In this way, the machine-learning model is trained to avoid overfitting of the machine-learning model to the first training set. Training the machine-learning model using the second training set broadens an applicability of the machine-learning model, ensuring that the machine-learning model can be used to categorize a broad range of transactions.

The first training set and the second training set may be included in the training data 140 of FIG. 1. The training data 140 of FIG. 1, as discussed above, may include multiple different training sets for use in different stages of training.

In some implementations, the method 600 includes identifying the incorrectly categorized transactions based on user input. In some implementations, the user may review one or more transactions categorized by the machine-learning model to identify the incorrectly categorized transactions. In some implementations, two different instances of the machine-learning model (trained separately) may categorize a set of transactions. The predicted MCCs of the two different instances may be compared and disagreements between the two instances may be reviewed by the user to determine whether the predicted MCCs are correct. In some implementations, the machine-learning model may be deployed to categorize transactions of a set of users which may provide feedback including the incorrectly categorized transactions. In an example, a user may review their transactions, correcting incorrectly categorized transactions.

The second training set may include transaction categories. In some implementations, the transaction categories may be added to the second training set for the second stage of training. In an example, the machine-learning model categorizes a set of transactions, the predicted transaction categories generated by the machine-learning model are compared to ground-truth transaction categories to determine that one or more of the transactions were incorrectly categorized, and the ground-truth transaction categories are added to the one or more transactions for use in the second training set.

At 660, the machine-learning model is trained in the second stage of training using the second training set. The machine-learning model may be trained in the second stage of training by applying the machine-learning model on the second training set. In this way, flaws in the machine-learning model may be addressed by training the machine-learning model on transactions that for some reason caused the machine-learning model to make a mistake. Training the machine-learning model using the second training set also broadens an applicability of the machine-learning model by avoiding overfitting of the machine-learning model to the first training set.

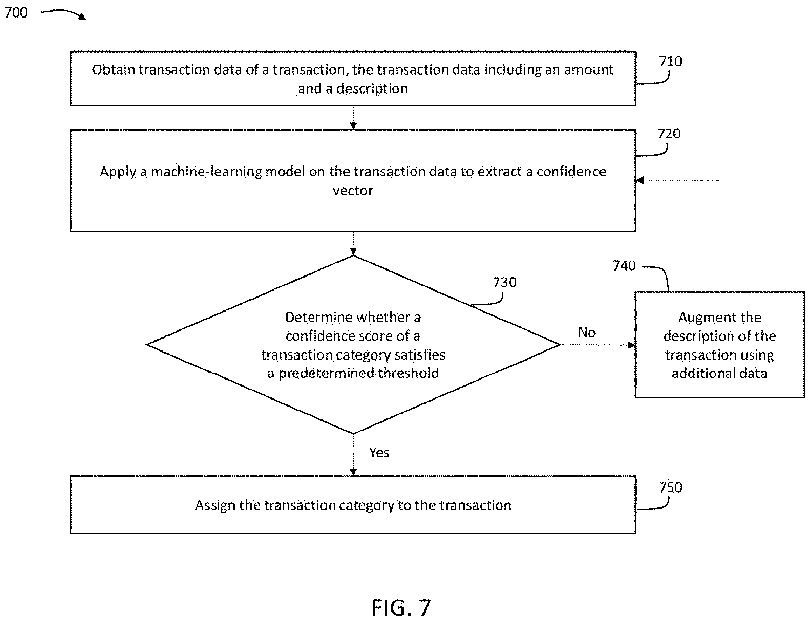

FIG. 7 is an example flow chart of a method for using a machine-learning model to classify transactions. The method 700 may be performed by one or more components of the computing system 100. The method 700 may include more, fewer, or different operations than shown. The operations may be performed in the order shown, in a different order, or concurrently.

At operation 710, transaction data is obtained, the transaction data including an amount and a description. At operation 720, a machine-learning model, such as the machine-learning model 150, is applied on the transaction data to extract a confidence vector. The confidence vector may include a plurality of transaction categories and a corresponding confidence score for each transaction category. In an example, the confidence vector includes MCCs and a confidence score indicating a strength of prediction for each MCC.

At operation 730, a determination is made whether a confidence score of a transaction category satisfies a predetermined threshold. In an example, a determination is made whether any of the confidence scores of the confidence vector is over .8. In an example, a determination is made whether a transaction category having the highest confidence score in the confidence vector has a confidence score over .8.

At operation 740, in response to a determination that no confidence score satisfies the predetermined threshold, the description of the transaction is augmented using additional data. In some implementations, the description of the transaction is augmented using the augmentation engine 130 of FIG. 1. At operation 720, the machine-learning model may be applied on the transaction with the augmented description to extract a new confidence vector. The description may be augmented multiple times in the method 700 based on determinations made at operation 730.

At operation 750, in response to a determination that the confidence score of the transaction category satisfies the predetermined threshold, the transaction category is assigned to the transaction. Assigning the transaction category predicted by the machine-learning model to the transaction may include recording the transaction and the predicted transaction category in a data structure, assigning the predicted transaction category to the transaction in the data structure, or otherwise associating the transaction and the predicted transaction category in a data structure.

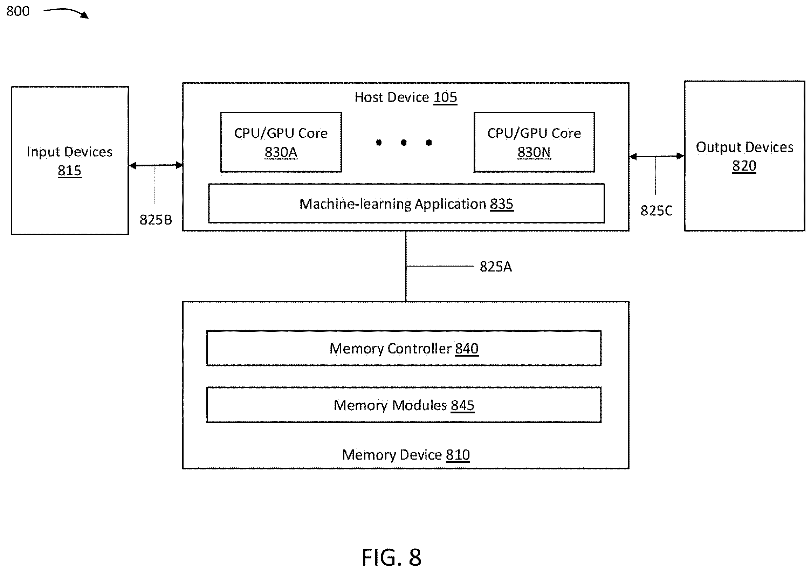

FIG. 8 is an example block diagram of a computing system 800, in accordance with some embodiments of the present disclosure. The computing system 800 includes a host device 805 associated with a memory device 810. The host device 805 may be configured to receive input from one or more input devices 815 and provide output to one or more output devices 820. The host device 805 may be configured to communicate with the memory device 810, the input devices 815, and the output devices 820 via appropriate interfaces or channels 825A, 825B, and 825C, respectively. The computing system 800 may be implemented in a variety of computing devices such as computers (e.g., desktop, laptop, etc.), tablets, personal digital assistants, mobile devices, wearable computing devices such as smart watches, other handheld or portable devices, or any other computing unit suitable for performing operations described herein using the host device 805.

Further, some or all of the features described in the present disclosure may be implemented on a client device, a server device, or a cloud/distributed computing environment, or a combination thereof. Additionally, unless otherwise indicated, functions described herein as being performed by a computing device (e.g., the computing system 800) may be implemented by multiple computing devices in a distributed environment, and vice versa.

The input devices 815 may include any of a variety of input technologies such as a keyboard, stylus, touch screen, mouse, track ball, keypad, microphone, voice recognition, motion recognition, remote controllers, input ports, one or more buttons, dials, joysticks, and any other input peripheral that is associated with the host device 805 and that allows an external source, such as a user, computer, or database, to enter information (e.g., data) into the host device and send instructions to the host device 805. Similarly, the output devices 820 may include a variety of output technologies such as external memories, databases, printers, speakers, displays, microphones, light emitting diodes, headphones, plotters, speech generating devices, video devices, and any other output peripherals that are configured to receive information (e.g., data) from the host device 805. The "data" that is either input into the host device 805 and/or output from the host device may include any of a variety of textual data, graphical data, video data, sound data, position data, combinations thereof, or other types of analog and/or digital data that is suitable for processing using the computing system 800.

The host device 805 may include one or more Central Processing Unit ("CPU") or Graphics Processing Unit ("GPU") cores or processors 830A-830N that may be configured to execute instructions for running one or more applications associated with the host device 805. In some embodiments, the instructions and data needed to run the one or more applications may be stored within the memory device 810. The host device 805 may also be configured to store the results of running the one or more applications within the memory device 810. One such application on the host device 805 may include a transaction categorization application 835. The transaction categorization application 835 may be executed by one or more of the CPU/GPU cores 830A-830N. The instructions to execute the transaction categorization application 835 may be stored within the memory device 810. The transaction categorization application 835 is described in greater detail above and may perform functions such as the method 600 of FIG. 6 and the method 700 of FIG. 7. Thus, the host device 805 may be configured to request the memory device 810 to perform a variety of operations. For example, the host device 805 may request the memory device 810 to read data, write data, update or delete data, and/or perform management or other operations.

To facilitate communication with the memory device 810, the memory device 810 may include or be associated with a memory controller 840. Although the memory controller 840 is shown as being part of the memory device 810, in some embodiments, the memory controller 840 may instead be part of the host device 805 or another element of the computing system 800 and operatively associated with the memory device 810. The memory controller 840 may be configured as a logical block or circuitry that receives instructions from the host device 805 and performs operations in accordance with those instructions. For example, when the execution of the transaction categorization application 835 is desired, the host device 805 may send a request to the memory controller 840. The memory controller 840 may read the instructions associated with the transaction categorization application 835 that are stored within the memory device 810, and send those instructions back to the host device. In some embodiments, those instructions may be temporarily stored within a memory on the host device 805. One or more of the CPU/GPU cores 830A-830N may then execute those instructions by performing one or more operations called for by those instructions of the transaction categorization application 835.

The memory device 810 may include one or more memory circuits 845 that store data and instructions. The memory circuits 845 may be any of a variety of memory types, including a variety of volatile memories, non-volatile memories, or a combination thereof. For example, in some embodiments, one or more of the memory circuits 845 or portions thereof may include NAND flash memory cores. In other embodiments, one or more of the memory circuits 845 or portions thereof may include NOR flash memory cores, Static Random Access Memory (SRAM) cores, Dynamic Random Access Memory (DRAM) cores, Magnetoresistive Random Access Memory (MRAM) cores, Phase Change Memory (PCM) cores, Resistive Random Access Memory (ReRAM) cores, 3D XPoint memory cores, ferroelectric random-access memory (FeRAM) cores, and other types of memory cores that are suitable for use within the memory device 810. In some embodiments, one or more of the memory circuits 845 or portions thereof may be configured as other types of storage class memory ("SCM"). Generally speaking, the memory circuits 845 may include any of a variety of Random Access Memory (RAM), Read-Only Memory (ROM), Programmable ROM (PROM), Erasable PROM (EPROM), Electrically EPROM (EEPROM), hard disk drives, flash drives, memory tapes, cloud memory, or any combination of primary and/or secondary memory that is suitable for performing the operations described herein.

It is to be understood that only some components of the computing system 800 are shown and described in FIG. 8. However, the computing system 800 may include other components such as various batteries and power sources, networking interfaces, routers, switches, external memory systems, controllers, etc. Generally speaking, the computing system 800 may include any of a variety of hardware, software, and/or firmware components that are needed or considered desirable in performing the functions described herein. Similarly, the host device 805, the input devices 815, the output devices 820, and the memory device 810, including the memory controller 840 and the memory circuits 845, may include hardware, software, and/or firmware components that are considered necessary or desirable in performing the functions described herein. In addition, in certain embodiments, the memory device 810 may integrate some or all of the components of the host device 805, including, for example, the CPU/GPU cores 830A-830N, and the CPU/GPU cores may be configured to execute the transaction categorization application 835, as described herein.

The various illustrative logical blocks, circuits, modules, routines, and algorithm steps described in connection with the embodiments disclosed herein can be implemented as electronic hardware, or combinations of electronic hardware and computer software. To clearly illustrate this interchangeability, various illustrative components, blocks, modules, and steps have been described above generally in terms of their functionality. Whether such functionality is implemented as hardware, or as software that runs on hardware, depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A control processor can synthesize a model for an FPGA. For example, the control processor can synthesize a model for logical programmable gates to implement a tensor array and/or a pixel array. The control channel can synthesize a model to connect the tensor array and/or pixel array on an FPGA, a reconfigurable chip and/or die, and/or the like. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Other aspects of the invention are defined in the following numbered statements:
Statement 1. A system comprising:
   one or more processors; and
   a computer-readable, non-transitory medium including instructions which, when executed by the one or more processors, cause at least one of the one or more processors to:
      obtain transaction data of a transaction, the transaction data including an amount and a description;
      apply a machine-learning model on the transaction data to extract a confidence vector, wherein the machine-learning model is trained to categorize transactions;
      determine whether a confidence score of a transaction category satisfies a predetermined threshold;
      in response to determining that the confidence score of the transaction category does not satisfy the predetermined threshold, augment the description of the transaction using additional data; and
      in response to determining that the confidence score of the transaction category satisfies the predetermined threshold, assign the transaction category to the transaction.
Statement 2. The system of Statement 1, wherein the machine-learning model is trained to categorize transactions using a training set comprising a set of categorized transactions.
Statement 3. The system of Statement 2, wherein the categorized transactions comprise standardized transaction categories and augmented descriptions.
Statement 4. The system of any of Statements 1 to 3, wherein the at least one of the one or more processors augments the description of the transaction by adding additional words to the description based on the description and additional information.
Statement 5. The system of Statement 4, wherein the additional information comprises at least one of an amount of the transaction, information from a website associated with a merchant associated with the transaction, historical user input, and location-specific information.
Statement 6. The system of any of Statements 1 to 5, wherein the confidence vector includes a confidence scores associated with a plurality of transaction categories including the transaction category.
Statement 7. A computer-implemented method of training a machine-learning model comprising:
   obtaining a set of transactions from a database;
   applying one or more transformations to each transaction from the set of transactions to create a modified set of transactions, the one or more transformations comprising at least one of standardizing a transaction category of each transaction or augmenting a description of each transaction;
   creating a first training set comprising the modified set of transactions;
   training a machine-learning model to categorize transactions in a first stage using the first training set;
   creating a second training set for a second stage of training, the second training set comprising transactions that were incorrectly categorized after the first stage of training; and
   training the machine-learning model to categorize transactions in a second stage using the second training set.
Statement 8. The computer-implemented method of Statement 7, wherein the transaction category comprises a transaction code corresponding to a categorization standard different from a categorization standard used in standardizing the transaction category.
Statement 9. The computer-implemented method of Statement 7 or 8, wherein standardizing the transaction category of each transaction comprises applying, to the transaction category, a mapping of transaction categories to a standard categorization.
Statement 10. The computer-implemented method of Statement 8 or 9, wherein standardizing the transaction category of each transaction comprises determining a category and a sub-category for the standardized transaction category.
Statement 11. The computer-implemented method of any of Statements 7 to 10, wherein augmenting the description of each transaction comprises adding additional words to the description based on the description and additional information.
Statement 12. The computer-implemented method of Statement 11, wherein the additional information comprises at least one of an amount of the transaction, information from a website associated with a merchant associated with the transaction, historical user input, and location-specific information.
Statement 13. The computer-implemented method of any of Statements 7 to 12, further comprising identifying the incorrectly categorized transactions based on user input.
Statement 14. A computer-readable, non-transitory medium including instructions which, when executed by one or more processors, cause at least one of the one or more processors to:
   obtain a set of transactions from a database;
   apply one or more transformations to each transaction from the set of transactions to create a modified set of transactions, the one or more transformations comprising at least one of standardizing a transaction category of each transaction or augmenting a description of each transaction;
   create a first training set comprising the modified set of transactions;
   train a machine-learning model to categorize transactions in a first stage using the first training set;
   create a second training set for a second stage of training, the second training set comprising transactions that were incorrectly categorized after the first stage of training; and
   train the machine-learning model to categorize transactions in a second stage using the second training set.
Statement 15. The computer-readable, non-transitory medium of Statement 14, wherein the transaction category comprises a transaction code corresponding to a categorization standard different from a categorization standard used in standardizing the transaction category.
Statement 16. The computer-implemented method of Statement 14 or 15, wherein standardizing the transaction category of each transaction comprises applying, to the transaction category, a mapping of transaction categories to a standard categorization.
Statement 17. The computer-implemented method of Statement 15 or 16, wherein standardizing the transaction category of each transaction comprises determining a category and a sub-category for the standardized transaction category.
Statement 18. The computer-implemented method of any of Statements 14 to 17, wherein augmenting the description of each transaction comprises adding additional words to the description based on the description and additional information.
Statement 19. The computer-implemented method of Statement 18, wherein the additional information comprises at least one of an amount of the transaction, information from a website associated with a merchant associated with the transaction, historical user input, and location-specific information.
Statement 20. The computer-implemented method of any of Statements 14 to 19, further comprising identifying the incorrectly categorized transactions based on user input.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While the above detailed description has shown, described, and pointed out novel features as applied to various embodiments, it can be understood that various omissions, substitutions, and changes in the form and details of the devices or algorithms illustrated can be made without departing from the spirit of the disclosure. As can be recognized, certain embodiments described herein can be embodied within a form that does not provide all of the features and benefits set forth herein, as some features can be used or practiced separately from others.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances, where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, unless otherwise noted, the use of the words "approximate," "about," "around," "substantially," etc., mean plus or minus ten percent.

The foregoing description of illustrative embodiments has been presented for purposes of illustration and of description. It is not intended to be exhaustive or limiting with respect to the precise form disclosed, and modifications and variations are possible in light of the above teachings or may be acquired from practice of the disclosed embodiments. It is intended that the scope of the invention be defined by the claims appended hereto and their equivalents.

## Claims

1. A system comprising:
one or more processors; and
a computer-readable, non-transitory medium including instructions which, when executed by the one or more processors, cause at least one of the one or more processors to:
obtain transaction data of a transaction, the transaction data including an amount and a description;
execute a machine-learning model using as input the transaction data to extract a first confidence vector comprising confidence scores for transaction categories;
determine whether a first confidence score of a first transaction category of the first confidence vector satisfies a predetermined threshold;
in response to determining that the first confidence score of the transaction category does not satisfy the predetermined threshold, augment the description of the transaction using additional data;
execute the machine-learning model using as input the transaction data and the augmented description to extract a second confidence vector; and
in response to determining that a second confidence score in the second confidence vector of the transaction category satisfies the predetermined threshold, assign the transaction category to the transaction.

2. The system of claim 1, wherein the at least one of the one or more processors augments the description of the transaction by adding additional words to the description based on the description and additional information.

3. The system of claim 2, wherein the additional information comprises at least one of an amount of the transaction, information from a website associated with a merchant associated with the transaction, historical user input, and location-specific information.

4. The system of any of claims 1 to 3, wherein the second confidence score is a highest confidence score of the second confidence vector.

5. A computer-implemented method of training a machine-learning model comprising:
obtaining a set of transactions from a database;
applying one or more transformations to each transaction from the set of transactions to create a modified set of transactions, the one or more transformations comprising at least one of standardizing a transaction category of each transaction or augmenting a description of each transaction;
creating a first training set comprising the modified set of transactions;
training a machine-learning model to categorize transactions in a first stage using the first training set;
creating a second training set for a second stage of training, the second training set comprising transactions that were incorrectly categorized after the first stage of training; and
training the machine-learning model to categorize transactions in a second stage using the second training set.

6. The computer-implemented method of claim 5, wherein the transaction category comprises a transaction code corresponding to a categorization standard different from a categorization standard used in standardizing the transaction category.

7. The computer-implemented method of claim 5 or 6, wherein standardizing the transaction category of each transaction comprises applying, to the transaction category, a mapping of transaction categories to a standard categorization.

8. The computer-implemented method of claim 6 or 7, wherein standardizing the transaction category of each transaction comprises determining a category and a sub-category for the standardized transaction category.

9. The computer-implemented method of any of claims 5 to 8, wherein augmenting the description of each transaction comprises adding additional words to the description based on the description and additional information.

10. The computer-implemented method of claim 9, wherein the additional information comprises at least one of an amount of the transaction, information from a website associated with a merchant associated with the transaction, historical user input, and location-specific information.

11. A computer-readable, non-transitory medium including instructions which, when executed by one or more processors, cause at least one of the one or more processors to:
obtain a set of transactions from a database;
apply one or more transformations to each transaction from the set of transactions to create a modified set of transactions, the one or more transformations comprising at least one of standardizing a transaction category of each transaction or augmenting a description of each transaction;
create a first training set comprising the modified set of transactions;
train a machine-learning model to categorize transactions in a first stage using the first training set;
create a second training set for a second stage of training, the second training set comprising transactions that were incorrectly categorized after the first stage of training; and
train the machine-learning model to categorize transactions in a second stage using the second training set.

12. The computer-readable, non-transitory medium of claim 11, wherein the transaction category comprises a transaction code corresponding to a categorization standard different from a categorization standard used in standardizing the transaction category.

13. The computer-implemented method of claim 11 or 12, wherein standardizing the transaction category of each transaction comprises applying, to the transaction category, a mapping of transaction categories to a standard categorization.

14. The computer-implemented method of claim 12 or 13, wherein standardizing the transaction category of each transaction comprises determining a category and a sub-category for the standardized transaction category.

15. The computer-implemented method of any of claims 11 to 14, wherein augmenting the description of each transaction comprises adding additional words to the description based on the description and additional information.
